**Europäisches Patentamt**

**European Patent Office**

**Office européen des brevets**

(19)

(11) Veröffentlichungsnummer : **0 243 344 B1**

(12) **EUROPÄISCHE PATENTSCHRIFT**

(45) Veröffentlichungstag der Patentschrift :
16.10.91 Patentblatt 91/42

(51) Int. Cl.$^5$ : **B62D 37/02**

(21) Anmeldenummer : **87890083.6**

(22) Anmeldetag : **23.04.87**

---

(54) **Aerodynamische Leiteinrichtung am Heck eines Personenkraftwagens.**

---

(30) Priorität : **25.04.86 AT 1118/86**

(43) Veröffentlichungstag der Anmeldung :
**28.10.87 Patentblatt 87/44**

(45) Bekanntmachung des Hinweises auf die
Patenterteilung :
**16.10.91 Patentblatt 91/42**

(84) Benannte Vertragsstaaten :
**CH DE FR GB IT LI SE**

(56) Entgegenhaltungen :
**DE-U- 7 512 852**
**DE-U- 7 912 264**
**US-A- 4 558 898**
**Automobil Revue, 1987, Seite 555**

(73) Patentinhaber : **Austria Metall**
**Aktiengesellschaft**
**A-5282 Braunau am Inn (AT)**

(72) Erfinder : **Laimighofer, Johann, Ing.**
**Am Stadtbach 32**
**A-5280 Braunau am Inn (AT)**
Erfinder : **Garnweidner, Peter**
**Otto v. Lilienthalstrasse 32**
**A-5020 Salzburg (AT)**
Erfinder : **Üblacker, Peter**
**Schilfgasse 4**
**A-5111 Dürmoos (AT)**

(74) Vertreter : **Hain, Leonhard, Dipl.-Ing.**
**Eduard-Schmid-Strasse 2**
**W-8000 München 90 (DE)**

**Beschreibung**

Die Erfindung bezieht sich auf eine aerodynamische Leiteinrichtung am Heck eines Personenkraftwagens, insbesondere Heckspoiler, gemäß dem Oberbegriff des Patentanspruches 1.

Aerodynamische Leiteinrichtungen, wie Heckspoiler, an Kraftfahrzeugen haben verschiedene Aufgaben. Einmal sollen sie den Luftwiderstand eines Fahrzeuges durch aerodynamisch richtige Lenkung des Luftstromes verringern. So kann beispielsweise durch einen derartigen Spoiler eine Art Abrißkante für die Luftströmung gebildet werden, ohne daß eine Wirbelbildung mit Sogwirkung am Endbereich des Fahrzeuges auftritt. Zum anderen beruht seine weitere und viel wesentlichere Aufgabe darin, die Bodenhaftung des Fahrzeuges in Abhängigkeit von der Fahrtgeschwindigkeit, insbesondere bei höheren Geschwindigkeiten, zu erhöhen. Diese Wirkung ergibt sich daraus, daß durch die Sogwirkung dieser Spoiler bei geeigneter Profilausbildung das Fahrzeug zusätzlich zum eigenen Gewicht auf die Fahrbahn gedrückt wird. Derartige Spoiler sind nun im Einsatz, insbesondere bei höheren Geschwindigkeiten, starken Krafteinwirkungen, die auch auf Karosserieteile übertragen werden, unterworfen. Bei einer aerodynamischen Leiteinrichtung gemäß der US-A-4 323 274 ist es bekannt,

diese mittels Stützen auf der Heckklappe zu befestigen, so daß diese ohne Behinderung hochgeklappt werden kann. Zur Steigerung ihrer Wirkung ist diese Leiteinrichtung in etwa geraden Verlängerungen über die Seitenwände des Kraftwagens weitergeführt, wobei an den Enden dieser Leiteinrichtung noch flossenförmige Abschlußkappen sich nach oben über die Leiteinrichtung hinaus erstrecken, um die auf die Leiteinrichtung einwirkende Luftströmung zu verstärken. Ein anderer vorbekannter Heckspoiler der Fahrzeugmarke "Toyota Supra Sport Coupé" (Zeitschrift Automobil-Revue 1987, Seite 555) ist ebenfalls an der Heckklappe, wie Kofferraumdeckel, befestigt. Seine Enden sind über die mit der Heckklappe kooperierenden Teile bzw. Seitenwände fortgesetzt, so daß der Spoiler sich über die Trennfuge zwischen Heckklappe und den damit kooperierenden Fahrzeug-Seitenwänden erstreckt. Zwar ist dieser Spoiler an seinen Endbereichen zur Fahrzeugkarosserie hin abgewinkelt, um eine Anpassung an die Karosserieform zu erreichen und um hochstehende Teile zu vermeiden, jedoch enden auch diese Spoilerenden in einem merklichen Abstand von den Karosserie-Seitenwänden. Diese bekannten über die Fahrzeugseiten hinaus verlängerten Spoiler erhöhen durch ihre freien Enden die Verletzungsgefahren, wie sie auch in Waschanlagen nicht gegen Schadensfälle geschützt sind. Ein weiterer ihnen anhaftender Nachteil besteht darin, daß diese Spoiler unter dem Einfluß der Luftströmung in unerwünschte Schwingungen versetzt werden, die insbesondere bei hohen Geschwindigkeiten nicht nur auf den Kofferraumdeckel, sondern auch auf die gesamte Karosserie übertragen werden und auch zu unangenehmer Geräuschbildung Anlaß geben können.

Der Erfindung liegt daher die Aufgabe zugrunde, eine aerodynamische Leiteinrichtung für das Heck eines Personenkraftwagens zu schaffen, die eine freie Zugänglichkeit zum Koffer- oder Heckladeraum ermöglicht und von der Luftströmung an der leiteinrichtung verursachte Schwingungen weitgehend beseitigt.

Die zur Lösung dieser Aufgabe vorgesehene aerodynamische Leiteinrichtung am Heck eines Personenkraftwagens, insbesondere Heckspoiler, die an einer Heckklappe, wie Kofferraumdeckel, vorgesehen ist und mit ihren seitlichen Endbereichen sich über die Trennfugen zwischen Heckklappe und den mit dieser kooperierenden Karosserieteilen, wie Seitenwänden, Kotflügeln od. dgl., erstreckt, ist erfindungsgemäß dadurch gekennzeichnet, daß die Leiteinrichtung mit ihren Endbereichen auf den mit der Heckklappe kooperierenden Karosserieteilen kraftübertragend aufliegt und an diesen Karosserieteilen Auflager für diese Endbereiche vorgesehen sind.

Mit einer solchen Leiteinrichtung wird erreicht, daß ein Heckspoiler quer zur Fahrtrichtung über den Kofferraumdeckel od. dgl. und sich über die Trennfuge zwischen den Seitenwänden und der Heckklappe hinaus erstreckend angebracht werden kann, ohne daß die Zugänglichkeit zum Kofferraum behindert wird. Zudem gewährleisten die an der Fahrzeugkarosserie aufliegenden Spoilerenden die Einleitung der auftretenden Kräfte an erwünschten Stellen der Seitenwände und damit auch eine Beseitigung der Spoilerschwingungen.

Ist diese Leiteinrichtung, insbesondere über aerodynamisch geformte Stützen, mit der Heckklappe verbunden, so kann die Wirkung derselben wesentlich erhöht werden, da sowohl die Ober- als auch die Unterseite der leiteinrichtung zu entsprechender Druck- bzw. Unterdruckausbildung im Luftstrom herangezogen werden kann, wobei erreichbar ist, daß der Luftwiderstand gering bleibt. Durch die aerodynamische Form der Stützen kann diese Wirkung durch Verhinderung von Wirbelbildungen und dgl. verbessert werden. Sind die beiden Enden der Leiteinrichtung zu den Seitenwänden, Kotflügel oder dgl. abgewinkelt ausgebildet, so wirken diese abgewinkelten Bereiche als zusätzliche Stützen, welche eine besonders günstige Kraftübertragung erlauben.

Weisen die Seitenwände, Kotflügel oder dgl. Auflager, insbesondere aus organischem Kunststoff, für die Leiteinrichtung auf, die vorzugsweise mit den abgewinkelten Bereichen der Leiteinrichtung kooperieren, so kann bei einer Krafteinleitung mit geringstem Spiel eine Schädigung der Oberflächen, z.B, des Lacks oder dgl., besonders günstig vermieden werden.

Weist die Leiteinrichtung einen im wesentlichen als Flügel ausgebildeten Teil auf, welcher mit einem, insbesondere metallischen, Hohlprofil, vorzugsweise mit einem Längssteg, insbesondere mit einer Aluminiumlegierung aufgebaut ist, dann kann ein besonders leichter, aber stabiler Heckspoiler erhalten werden. Ein metallisches Hohlprofil erhöht wesentlich die Sicherheit, da auch geringste Aufdruckunterschiede des Fahrzeuges auf der Straße, bedingt durch Schwingungen des Spoilers, vermieden werden können. Sind die abgewinkelten Bereiche jeweils mit der restlichen Leiteinrichtung verbunden, z.B. verschweißt oder verklebt, insbesondere durch metallische Formstücke gebildet, welche vorzugsweise keilförmige Kooperationsflächen für das Auflager aufweisen, so kann eine besonders einfache Fertigung der Leiteinrichtung erreicht werden, wobei bei Verwendung von metallischen Formstücken der im wesentlichen ohne Deformation erreichten Krafteinleitung besonders vorteilhaft durchführbar ist. Die keilförmigen Kooperationsflächen bewirken eine Selbstzentrierung des Spoilers auf dem Auflager.

Weisen die Auflager ebenfalls keilförmige Kooperationsflächen für die Formstücke auf, so kann neben der Selbstzentrierung des Heckspoilers auch eine besonders günstige Kraftübertragung, und zwar nicht nur lineinförmig, sondern auch flächig erreicht werden. Sind die Formstücke hohl ausgebildet und weisen eine Trennwand auf, durch die zwei im wesentlichen voneinander getrennte Hohlräume gebildet werden, so können die Formstücke mit geringeren Wandstärken bei gleich hohen zu übertragenden Kräften ausgebildet werden. Weisen die Auflager, in Fahrtrichtung gesehen, eine größere Erstreckung als im wesentlichen normal hiezu gesehen auf, so können die abgewinkelten Endbereiche der Leiteinrichtung ebenfalls einen Querschnitt aufweisen, welcher in etwa dem der übrigen Leiteinrichtung entspricht.

Im folgenden wird die Erfindung an Hand der Zeichnungen näher erläutert:

Es zeigen

Fig. 1 / das Heck eines Personenkraftwagens mit Leiteinrichtung;

Fig. 2 / eine Leiteinrichtung in Sicht von unten;

Fig. 3 / verschiedene Querschnitte der Leiteinrichtung und

Fig. 4 / ein Formstück mit Auflager im Schnitt.

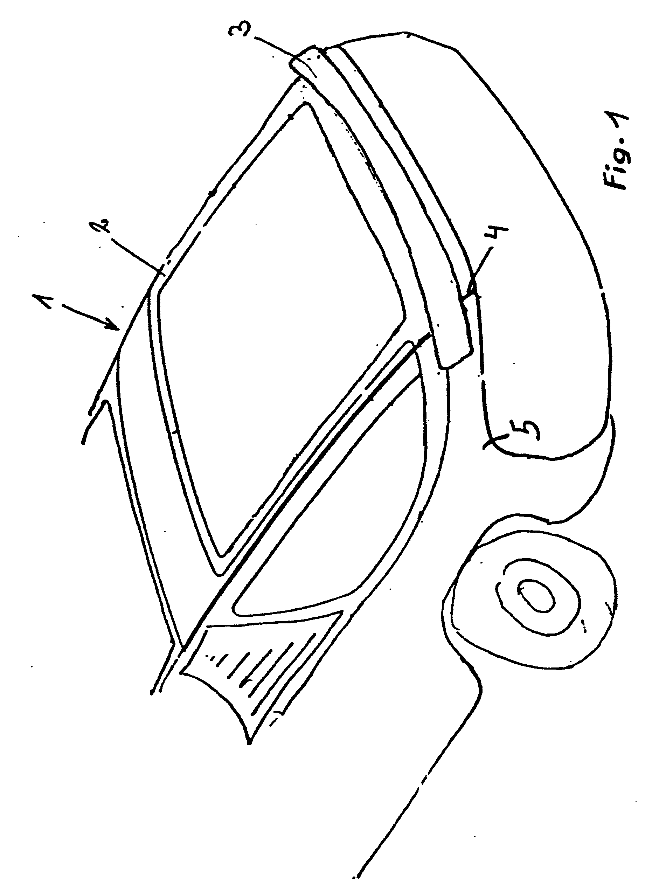

Das in Fig. 1 schematisch dargestellte Heck 1 eines Fahrzeuges weist eine Heckklappe 2 mit Fenster auf. Auf der Heckklappe 2 ist eine aerodynamische Leiteinrichtung 3 befestigt, die über die Trennnut 4, welche zwischen Seitenwänden 5 und Heckklappe 2 gebildet ist, wesentlich hinwegragt.

Wie aus Fig. 2 ersichtlich, weist die Leiteinrichtung 3 Stützen 6 auf, die im Mittelbereich des Spoilers vorgesehen sind, über welche, z.B. mit Schrauben, durch Kleben oder dgl., die Verbindung der Leiteinrichtung mit der Heckklappe 2 erfolgt. Die Leiteinrichtung weist abgewinkelte Bereiche 7 auf, die durch Formstücke 8 gebildet sind, welche aus einer analogen Aluminiumlegierung, wie die andere Leiteinrichtung, besteht und ist mit dieser verschweißt. Die Stützen 6 sind, wie ersichtlich, aerodynamisch geformt, um einen möglichst geringen Strömungswiderstand zu verursachen und Wirbelbildung zu vermeiden.

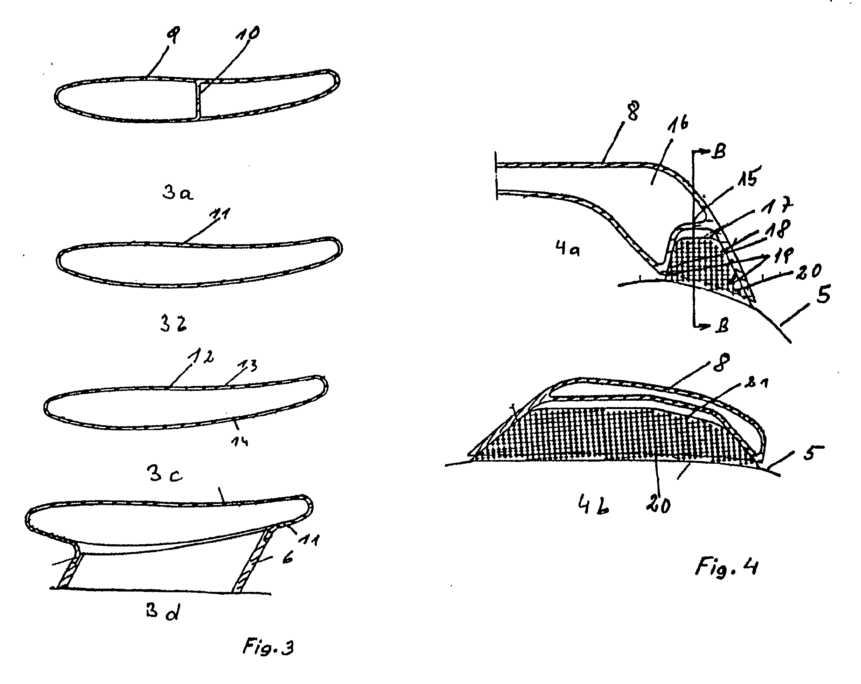

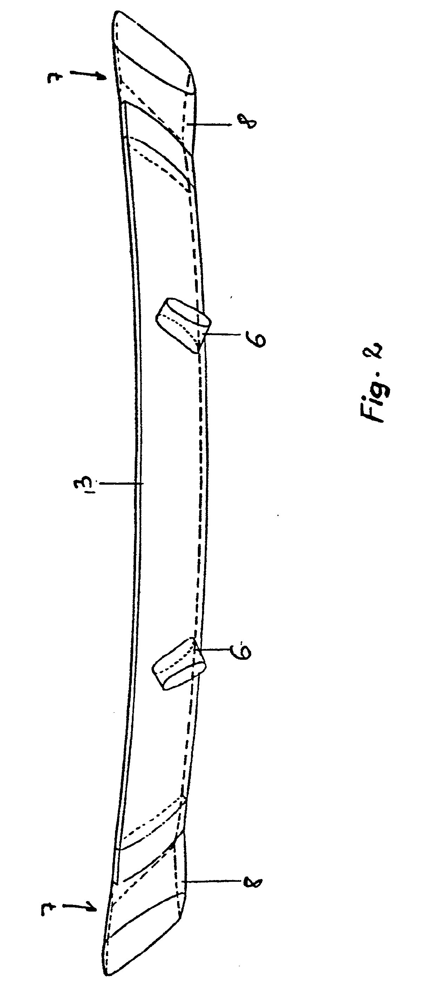

Wie aus Fig. 3 ersichtlich, kann der mittlere Bereich der Leiteinrichtung, welcher als Flügel ausgebildet ist, durch verschiedene Hohlprofile gebildet sein. So ist in Fig. 3a der Querschnitt eines Stangpreß-Hohlprofiles 9 mit Längssteg 10 ausgebildet. Das Hohlprofil 11 gemäß 3b ist ebenfalls ein Strangpreßprofil, welches jedoch keinen Längssteg aufweist. Das Profil 12 gemäß 3c ist aus zwei Halbschalen 13 und 14 aufgebaut, die biespielweise aus einer Aluminiumlegierung bestehen können, jedoch besteht auch die Möglichkeit, daß beispielweise die Schale 13 mit einer Aluminiumlegierung, hingegen die Schale 14 mit einem organischen Kunststoff aufgebaut ist. Durch eine derartige Materialkombination kann auch noch eine ausreichende Festigkeit für bestimmte Anwendungen erreicht werden. In 3d ist der Schnitt durch die Leiteinrichtung im Bereich einer Stütze 6 vorgesehen, wobei die Verbindung zwischen Stütze und dem Profil 11, welches im Bereich der Stütze ausgebördelt wurde, dargestellt. Die Verbindung erfolgte durch Kleben. Die Stütze 6 kann ihrerseits aus Metall oder organischem Kunststoff bestehen, wobei in der Stütze beispielsweise eingegossene Schrauben oder Muttergewinde vorgesehen sein können.

In Fig. 4a ist die Leiteinrichtung teilweise in Schnitt dargestellt, wobei das Formstück 8 eine Trennwand 15 aufweist, durch welche zwei voneinander getrennte Hohlräume 16 und 17 gebildet werden. Im Hohlraum 17 sind keilförmige Kooperationsflächen 18 vorgesehen, die mit analogen keilförmigen Kooperationsflächen 19 des Auflagers 20 zusammenwirken. Das Auflager 20 besteht aus einem organischen Kunststoff, welches mit der Seitenwand 5 verklebt ist, obwohl in manchen Fällen eine Verschraubung auch erwünscht sein kann.

In Fig. 4b ist der Schnitt durch Formstück und Auflager entlang der Linie BB dargestellt, welche in etwa in Fahrtrichtung weist. Wie ersitlich, ist die Längserstreckung, des Auflagers 20, also die Erstreckung in Fahrtrichtung, größer als die Erstreckung in Querrichtung des Fahrzeuges.

Das Auflager 20 reicht, wie sowohl aus Fig. 4a, als auch aus Fig. 4b ersichtlich, mit seiner oberen Stirnfläche 21 nicht bis zur Trennwand 15, so daß die volle Zentrierfähigkeit der keilförmigen Flächen erhalten bleibt. Der Raum, welcher bei Schließen der Heckklape 2 zwischen der Trennwand 15 und der oberen Stirfläche 21 gebildet wird, muß mit der Umwelt in Verbindung sein, um einen Überdruck und damit schlechtes Aufsetzen der Leiteinrichtung 3 zu vermeiden bzw. um ein leichtes Öffnen der Heckklappe 2 zu ermöglichen.

**Patentansprüche**

1. Aerodynamische Leiteinrichtung (3) am Heck (1) eines Personenkraftwagens, insbesondere Heckspoiler, die an einer Heckklappe (2), wie Kofferraumdeckel, vorgesehen ist und mit ihren seitlichen Endbereichen (7) sich über die Trennlinien (4) zwischen Heckklappe (2) und den mit dieser kooperierenden Karosserieteilen (5), wie Seitenwänden, Kotflügeln od. dgl., erstreckt, dadurch gekennzeichnet, daß die Leiteinrichtung (3) mit ihren Endbereichen (7) auf den mit der Heckklappe (2) kooperierenden Karosserieteilen (5) kraftübertragend aufliegt und an diesen Karosserieteilen Auflager (20) für diese Endbereiche vorgesehen sind.

2. Leiteinrichtung nach Anspruch 1, dadurch gekennzeichnet, daß sie über aerodynamisch geformte Stützen (6) mit der Heckplatte verbunden ist.

3. Leiteinrichtung nach Anspruch 1, dadurch gekennzeichnet, daß sie an ihren beiden Enden zu den Karosserieteilen (5) hin abgewinkelt ist.

4. Leiteinrichtung nach Anspruch 1, dadurch gekennzeichnet, daß die Auflager (20) aus organischem Kunststoff gebildet sind.

5. Leiteinrichtung nach einem der Ansprüche 1 bis 5, dadurch gekennzeichnet, daß diese in Form eines Hohlprofil-Flügels (9,11,12) ausgebildet ist.

6. Leiteinrichtung nach Anspruch 5, dadurch gekennzeichnet, daß der Hohlprofil-Flügel (9) einen Innenlängssteg (10) aufweist.

7. Leiteinrichtung nach einem der Ansprüche 3 bis 6, dadurch gekennzeichnet, daß die abgewinkelten Bereiche (7) von Formstücken (8), die mit der Leiteinrichtung durch Verschweißung, Verklebung od. dgl. verbunden sind, gebildet sind.

8. Leiteinrichtung nach Anspruch 7, dadurch gekennzeichnet, daß die Formstücke (8) keilförmige Kooperationsflächen (18) für das Auflager (20) aufweisen.

9. Leiteinrichtung nach einem der Ansprüche 1 bis 8, dadurch gekennzeichnet, daß die Auflager (20) keilförmige Kooperationsflächen (19) aufweisen.

10. Leiteinrichtung nach Anspruch 7 oder 8, dadurch gekennzeichnet, daß die Formstücke (8) hohl ausgebildet sind und eine Trennwand (15) aufweisen, durch die zwei voneinander getrennte Hohlräume (16,17) gebildet sind.

11. leiteinrichtung nach einem der Ansprüche 1 bis 10, dadurch gekennzeichnet, daß die Auflager (20), in Fahrtrichtung gesehen, eine größere Ausdehnung als in senkrechter Richtung hierzu aufweisen.

**Claims**

1. An aerodynamic guide device (3) at the rear (1) of a passenger motor vehicle, in particular a rear spoiler, which is provided on a rear flap (2) such as a boot lid, and which extends with its lateral end regions (7) over the dividing lines (4) between the rear flap (2) and the parts (5) of the bodywork, which co-operate with the rear flap, such as side walls, wings or the like, characterised in that the guide device (3) is supported in a force-transmitting manner with its end regions (7) on the parts (5) of the bodywork which co-operate with the rear flap (2) and supports (20) for said end regions are provided at said bodywork parts.

2. A guide device according to claim 1 characterised in that it is connected to the rear panel by way of aerodynamically shaped connecting members (6).

3. A guide device according to claim 1 characterised in that it is angled at its two ends towards the bodywork parts (5).

4. A guide device according to claim 1 characterised in that the supports (20) are formed from organic plastics material.

5. A guide device according to one of claim 1 to 4 characterised in that it is in the form of a hollow profile wing member (9, 11, 12).

6. A guide device according to claim 5 characterised in that the hollow profile wing member (9) has an internal longitudinal web (10).

7. A guide device according to one of claim 3 to 6 characterised in that the angled regions (7) are formed by shaped portions (8) which are connected to the guide device by welding, glueing or the like.

8. A guide device according to claim 7 characterised in that the shaped portions (8) have wedge-shaped co-operating surfaces (18) for the support (20).

9. A guide device according to one of claim 1 to 8 characterised in that the supports (20) have wedge-shaped co-operating surfaces (19).

10. A guide device according to claim 7 or claim 8 characterised in that the shaped portions (8) are hollow and have a dividing wall (15) forming two cavities (16, 17) which are separated from each other.

11. A guide device according to one of claim 1 to 10 characterised in that, as viewed in the direction of travel, the supports (20) are of a greater extent than in a direction normal to the direction of travel.

**Revendications**

1. Dispositif (3) de guidage aérodynamique placé à l'arrière (1) d'une voiture automobile particulière, en particulier un aileron déflecteur ou "spoiler" arrière, qui est prévu sur un élément rabattable arrière (2), tel qu'un couvercle de malle, et qui s'étend par ses zones latérales extrêmes (7) au-delà des lignes (4) de séparation entre l'élément rabattable arrière (2) et les parties (5) de carrosserie qui coopèrent avec celui-ci, telles que les parois latérales, les ailes, ou des parties similaires, dispositif caractérisé en ce que le dispositif (3) de guidage s'appuie, de manière à transmettre des forces, par ses zones (7) d'extrémité sur les parties (5) de carrosserie qui coopèrent avec l'élément rabattable arrière (2) et en ce que, sur ces parties de carrosserie, des supports (20) sont prévus pour ces zones d'extrémité.

2. Dispositif de guidage selon la revendication 1, caractérisé en ce qu'il est relié à la plaque arrière au moyen de supports (6) de forme aérodynamique.

3. Dispositif selon la revendication 1, caractérisé en ce qu'il est coudé à ses deux extrémités en direction des parties (5) de carrosserie.

4. Dispositif de guidage selon la revendication 1, caractérisé en ce que les supports (20) sont réalisés en du matériau de synthèse organique.

5. Dispositif de guidage selon l'une des revendications 1 à 4, caractérisé en ce que ce dispositif a la forme d'une aile (9, 11, 12) réalisée en du profilé creux.

6. Dispositif de guidage selon la revendication 5, caractérisé en ce que l'aile (9) en profilé creux présente une nervure longitudinale intérieure (10).

7. Dispositif de guidage selon une des revendications 3 à 6, caractérisé en ce que les zones (7) coudées sont formées par des pièces moulées (8),qui sont reliées au dispositif de guidage par soudure, par collage ou par un moyen similaire.

8. Dispositif de guidage selon la revendication 7, caractérisé en ce que les pièces moulées (8) présentent des surfaces (18) de coopération,en forme de coins, destinées au support (20).

9. Dispositif de guidage selon l'une des revendications 1 à 8, caractérisé en ce que les supports (20) présentent des surfaces (19) de coopération en forme de coins.

10. Dispositif de guidage selon la revendication 7 ou 8, caractérisé en ce que les pièces moulées (8) sont creuses et présentent une cloison (15) de séparation, grâce à laquelle sont formés deux espaces creux (16, 17) séparés l'un de l'autre.

11. Dispositif de guidage selon l'une des revendications 1 à 10, caractérisé en ce que le support (20), vu dans le sens de la marche, a une plus grande extension que dans le sens perpendiculaire à ce sens de la marche.

Fig. 1

EP 0 243 344 B1

Fig. 4

Fig. 3

8

Fig. 2

EP 0 243 344 B1